# EUROPÄISCHE PATENTSCHRIFT

(11) **EP 2 358 510 B1**
(45) Veröffentlichungstag und Bekanntmachung des Hinweises auf die Patenterteilung: **17.08.2016**
(21) Anmeldenummer: 09759894.0
(22) Anmeldetag: 24.11.2009
(51) Int. Cl.: B27B 13/04, B27B 15/04, B23D 53/02

(54) **VERFAHREN ZUM WECHSELN EINES BANDSÄGEBLATTS**
METHOD FOR REPLACING A BAND SAW BLADE
PROCÉDÉ POUR CHANGER UNE LAME DE SCIE À RUBAN

(30) Priorität: 28.11.2008 DE 102008060172
(43) Veröffentlichungstag der Anmeldung: 24.08.2011
(73) Patentinhaber: Gebrüder Linck Maschinenfabrik "Gatterlinck" GmbH & Co. KG, 77704 Oberkirch (DE)
(72) Erfinder: PLEININGER, Armin, 84375 Kirchdorf am Inn (DE)
(74) Vertreter: Witte, Weller & Partner Patentanwälte mbB
(86) Internationale Anmeldenummer: PCT/EP2009/008337
(87) Internationale Veröffentlichungsnummer: WO 2010/060588

(56) Entgegenhaltungen:
- US-A- 2 711 196
- US-A- 5 243 888
- US-A1- 2003 196 535
- US-A1- 2003 209 124

## Beschreibung

Die Erfindung betrifft ein Verfahren zum seitlichen Absägen von Brettern von einem Baumstamm mittels einer Blockbandsäge, bei der ein Bandsägeblatt über zwei um horizontale Achsen drehbare Rollen geführt ist, die Rollen in einer Arbeitsstellung der Bandsäge übereinander angeordnet sind und eine die Drehachsen verbindende Linie um einen Winkel zur Vertikalen geneigt ist, wobei in der Arbeitsstellung der Baumstamm auf einer unteren, zur Horizontalen um den Winkel geneigten Auflagefläche einer Auflage eines Blockbandwagens fixiert ist, der Blockbandwagen an einem Bandsägeblatt der Blockbandsäge vorbei verfahren und dabei ein Brett abgesägt wird und das abgesägte Brett in Richtung des Bandsägeblatts geführt seitlich nach unten rutscht.

Ein solches Verfahren wird in der Figur 2 der US 5,243,888 offenbart.

Bandsägen sind üblicherweise als Vertikalbandsägen ausgebildet, bei denen die obere Rolle sich vertikal über der unteren Rolle befindet und der sägende Abschnitt des Bandsägeblatts daher vertikal verläuft. Daneben sind auch Horizontalbandsägen bekannt, bei denen die Rollen nebeneinander angeordnet sind und der sägende Abschnitt des Bandsägeblatts folglich horizontal verläuft.

Es sind auch Vertikalbandsägen bekannt, die zum wahlweisen Ausführen von vertikalen oder geneigten Sägeschnitten verschwenkbar sind, beispielsweise aus der DE 82 28 675 U, der US 3, 733,952, der US 2,711,196 und der US 2003/0209124 A1. Diese Sägen sind sogenannte Gehrungssägen mit horizontalem Sägetisch, mit denen es möglich ist, beispielsweise Rahmenschenkel für Rahmen an ihren Enden mit einem geneigten Schnitt zu versehen.

Aus der US 2003/0196535 A1 ist für eine derartige Gehrungssäge beschrieben, dass man zum Wechsel des Bandsägeblatts die obere Rolle mittels eines Hebelgestänges absenken kann, um das dann schlaffe Sägeband abzunehmen und zu wechseln.

Im Rahmen der vorliegenden Erfindung sind Blockbandsägen angesprochen, mit denen Bretter seitlich von einem Baumstamm abgesägt werden. Wenn die Blockbandsäge als Vertikalbandsäge ausgebildet ist, dann fallen die abgesägten Bretter frei nach unten und schlagen mit ihrer Schmalseite auf. Bei empfindlichen Hölzern, beispielsweise bei Buche, kann dies zu einer merklichen Beschädigung der Bretter führen.

Es ist daher ebenfalls bekannt, Vertikalbandsägen dahingehend zu modifizieren, dass die Rollen seitlich zueinander versetzt werden, so dass der Sägeschnitt nicht exakt in einer Vertikalebene liegt sondern in einer geringfügig, beispielsweise um 17° dazu geneigten Ebene. Dann fallen die abgesägten Bretter nicht vertikal frei nach unten sondern rutschen geführt seitlich weg.

Bandsägeblätter sind auf den sie führenden Rollen unter Längsspannung gehalten. Diese Längsspannung wird dadurch erzeugt, dass man die Rollen etwas aufeinander zu bewegt, dann das Bandsägeblatt lose auf die Rollen auflegt und die Rollen dann wieder voneinander weg bewegt, bis die gewünschte Zugspannung im Bandsägeblatt erreicht ist.

Umgekehrt wird bei einem Wechsel eines Bandsägeblatts so verfahren, dass man die Rollen aufeinander zu bewegt, das dann lose Bandsägeblatt abnimmt und ein neues Bandsägeblatt auflegt. Zum Abnehmen des Bandsägeblatts wird üblicherweise ein bügelartiges Holzteil verwendet, dessen Bogen in etwa dem Bogen der oberen Rolle entspricht und auf das das Bandsägeblatt von der Rolle her aufgeschoben wird. Diese Arbeit und damit der gesamte Bandwechsel, kann normalerweise problemlos von einer Person ausgeführt werden.

Bei einer Bandsäge der oben genannten Art mit um beispielsweise um 17° geneigter Anordnung gestaltet sich der Wechsel des Bandsägeblatts hingegen schwierig, weil das Bandsägeblatt dann, wenn man die Rollen etwas voneinander weg bewegt, mit viel Geschick aus dem Gehäuse entfernen muss. Es sind dazu mindestens zwei Personen erforderlich, nämlich eine, die oben mittels des bügelartigen Teils das Bandsägeblatt von der oberen Rolle abnimmt und eine zweite Person, die den unteren Teil des Bandsägeblatts aus dem Bereich der unteren Rolle und aus dem Gehäuse entfernt. Die letztgenannte Tätigkeit ist auch gefährlich, weil die zweite Person oberhalb des tiefen Schachtes arbeiten muss, der für die Abfuhr der Späne vorgesehen ist.

Der Erfindung liegt daher die Aufgabe zugrunde, ein Verfahren der eingangs genannten Art dahingehend weiterzubilden, dass diese Nachteile vermieden werden. Insbesondere soll es mit nur einer Person gefahrlos möglich sein, ein Bandsägeblatt bei einer Bandsäge der genannten Art zu wechseln.

Bei einem Verfahren der eingangs genannten Art wird diese Aufgabe erfindungsgemäß dadurch gelöst, dass die Rollen aus der Arbeitsstellung in eine Bandwechselstellung verfahren werden, in der die Linie vertikal verläuft, dass die verfahrenen Rollen aufeinander zu bewegt werden und dass dann das von der oberen Rolle lose herabhängende Bandsägeblatt abgenommen und durch ein anderes Bandsägeblatt ersetzt wird.

Die der Erfindung zugrunde liegende Aufgabe wird auf diese Weise vollkommen gelöst.

Die Erfindung ermöglicht es nämlich erstmals, auch bei einer Bandsäge mit geneigtem Bandsägeblatt so vorzugehen wie bei einer üblichen Vertikalbandsäge. Dadurch wird der Arbeitsvorgang des Bandwechsels sehr vereinfacht und gefahrlos.

Weitere Vorteile ergeben sich aus der Beschreibung und der beigefügten Zeichnung. Es versteht sich, dass die vorstehend genannten und die nachstehend noch zu erläuternden Merkmale nicht nur in der jeweils angegebenen Kombination, sondern auch in anderen Kombinationen verwendbar sind, ohne den Rahmen des Patentanspruchs zu verlassen.

Ausführungsbeispiele der Erfindung sind in der Zeichnung dargestellt und werden in der nachfolgenden Beschreibung näher erläutert. Es zeigen:
- Figur 1:: eine äußerst schematisierte Seitenansicht einer Bandsäge, bei der das erfindungsgemäße Verfahren ausführbar ist, in einer Arbeitsstellung; und
- Figur 2:: in einer Darstellung wie Figur 1 die Bandsäge in einer Bandwechselstellung.

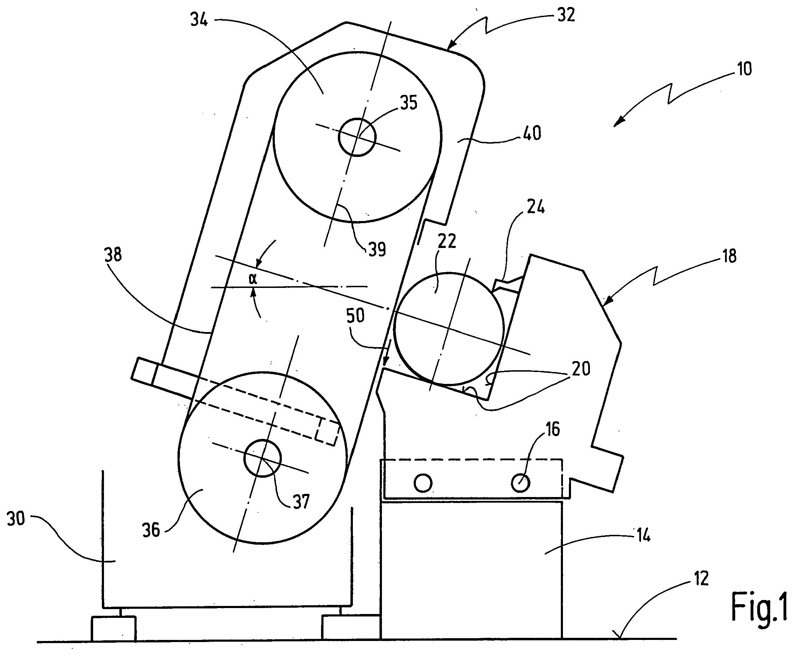

In Figur 1 bezeichnet 10 eine Bandsäge, insbesondere eine so genannte Blockbandsäge.

Die Bandsäge 10 steht vorzugsweise stationär auf einem Fundament 12, sie kann aber auch als mobile Einheit ausgebildet sein. Auf dem Fundament 12 steht eine Längsführung 14 mit Führungselementen 16, beispielsweise Stangen oder Schienen. Entlang der Führungselemente, also senkrecht zur Zeichenebene der Figur 1, ist ein Blockbandwagen 18 verfahrbar. Der Blockbandwagen 18 weist eine Aufnahme 20, beispielsweise zwei um 90° zueinander geneigte Auflageflächen, für einen Baumstamm 22 auf, der sich ebenfalls senkrecht zur Zeichenebene der Figur 1 erstreckt. Der Baumstamm 22 ist vorzugsweise in der Aufnahme 20 fixiert, beispielsweise mittels eines Hakens 24.

Die untere Auflagefläche der Aufnahme 20 ist zur Horizontalen um einen Winkel α geneigt, der vorzugsweise 17° beträgt.

Auf dem Fundament 12 steht neben dem Blockbandwagen 18 ein Maschinengestell 30. Das Maschinengestell 30 trägt in an sich bekannter Weise eine Bandsäge 32 mit einer oberen Rolle 34, die um eine horizontale Achse 35 drehbar ist, sowie einer unteren Rolle 36, die um eine horizontale Achse 37 drehbar ist. Um die Rollen 34 und 36 ist ein Bandsägeblatt 38 geführt.

Eine die Achsen 35 und 37 verbindende Linie 39 ist zur Vertikalen um den Winkel α geneigt. Dies gilt auch für den Sägebereich des Bandsägeblatts 38, wo es rechts in Figur 1 tangential zu den Rollen 34 und 36 verläuft.

Wie man aus Figur 1 erkennen kann, werden auf diese Weise Bretter seitlich vom Baumstamm 22 abgesägt, die dann in Richtung eines Pfeils 50 geführt und seitlich nach unten rutschen können.

Wollte man das Bandsägeblatt 38 in der in Figur 1 dargestellten Arbeitsstellung der Bandsäge 32 wechseln, so wäre dies schwierig. Wenn man zu diesem Zweck die Rollen 34 und 36 etwas voneinander weg bewegen würde, dann läge das Bandsägeblatt unten immer noch seitlich auf der unteren Rolle 36 auf und müsste dort von Hand abgenommen werden. Dies wäre unter den engen räumlichen Bedingungen im Gehäuse eine eher umständliche Arbeit, die vor allem von einer zweiten Person durchgeführt werden müsste, wenn eine erste Person das Bandsägeblatt 38 oben mittels eines geeigneten bogenförmigen Werkzeugs von der oberen Rolle 34 abnimmt.

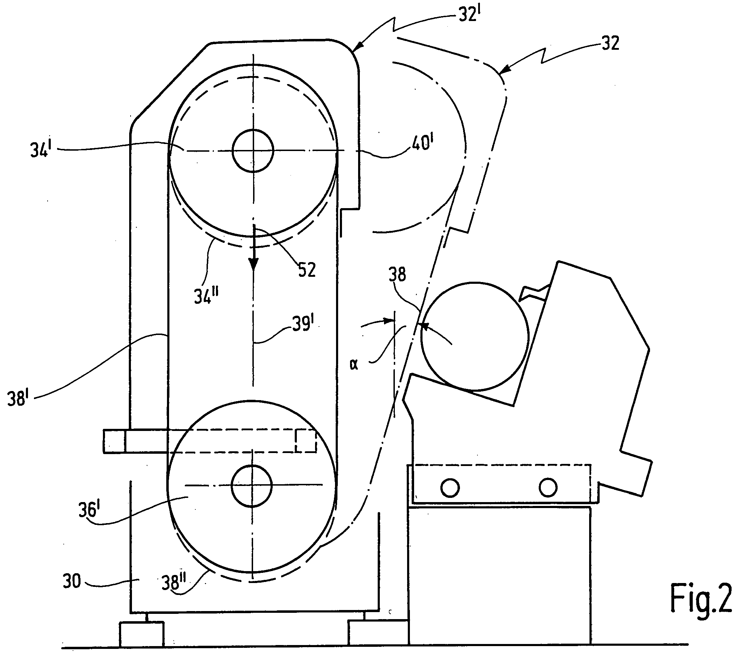

Erfindungsgemäß ist daher vorgesehen, die Bandsäge 38 auf dem Maschinengestell 30 verschwenkbar anzuordnen. Dann ist es möglich, wie in Figur 2 dargestellt, die Bandsäge aus der geneigten Arbeitsstellung gemäß Figur 1 in eine vertikal ausgerichtete Bandwechselstellung gemäß Figur 2 zu verschwenken, wo die verschwenkten Elemente durch die selben Bezugszeichen mit hinzugefügtem Apostroph bezeichnet sind. Das Verschwenken kann entlang geeigneter kreis- oder bogenförmiger oder sonstiger Bahnen erfolgen, wobei vorzugsweise entsprechende Kolben-ZylinderEinheiten verwendet werden, um den jeweiligen Bewegungsablauf zu vollziehen.

Wenn sich die Bandsäge 32 in der Bandwechselstellung 32' gemäß Figur 2 befindet, dann steht die obere Rolle 34' oberhalb der unteren Rolle 36'. Man wird nun die Rollen 34' und 36' aneinander annähern, indem man beispielsweise die obere Rolle von der in Figur 2 durchgezogen gezeichneten Stellung 34' in eine etwas abgesenkte, gestrichelt gezeichnete Stellung 34" bewegt, wie mit einem Pfeil 52 angedeutet.

Wie man leicht sieht, liegt nun das gestrichelt gezeichnete Bandsägeblatt 38" lose oben auf der oberen Rolle 34" auf und hängt unten lose unterhalb der unteren Rolle 36' durch. Man kann daher das Bandsägeblatt 38" jetzt oben mittels des bogenförmigen Werkzeugs von der oberen Rolle 34" auf das Werkzeug aufschieben, wobei das untere Ende des Bandsägeblatts 38" dieser Bewegung ohne Schwierigkeiten folgt.

In der gleichen Weise kann man mit Schritten in der entgegen gesetzten Reihenfolge ein neues Bandsägeblatt auflegen.

## Patentansprüche

1. Verfahren zum seitlichen Absägen von Brettern von einem Baumstamm (22) mittels einer Blockbandsäge (10), bei der ein Bandsägeblatt (28) über zwei um horizontale Achsen (35, 37) drehbare Rollen (34, 36) geführt ist, die Rollen (34, 36) in einer Arbeitsstellung der Bandsäge (10) übereinander angeordnet sind und eine die Drehachsen (35, 37) verbindende Linie (39) um einen Winkel (α) zur Vertikalen geneigt ist, wobei in der Arbeitsstellung der Baumstamm (22) auf einer unteren, zur Horizontalen um den Winkel (α) geneigten Auflagefläche einer Auflage (20) eines Blockbandwagens (18) fixiert ist, der Blockbandwagen (18) an einem Bandsägeblatt (38) der Blockbandsäge (10) vorbei verfahren und dabei ein Brett abgesägt wird und das abgesägte Brett in Richtung (50) des Bandsägeblatts (38) geführt seitlich nach unten rutscht **dadurch gekennzeichnet, dass** in einer Bandwechselstellung die Rollen (34, 36) aus der Arbeitsstellung derart verfahren werden, dass die Linie (39') vertikal verläuft, die verfahrenen Rollen (34', 36') aufeinander zu bewegt (52) werden und dann das von der oberen Rolle (34") lose herabhängende Bandsägeblatt (38") abgenommen und durch ein anderes Bandsägeblatt ersetzt wird.

## Claims

1. Method for laterally sawing boards off a tree trunk (22) by means of a log band saw (10), in which a band saw blade (28) is guided over two rollers (34, 36) that are rotatable about horizontal axes (35, 37), the rollers (34, 36) are arranged one above the other in a working position of the band saw (10), and a line (39) connecting the axes of rotation (35, 37) is inclined at an angle (α) to the vertical, wherein, in the working position, the tree trunk (22) is fixed to a lower supporting surface, inclined at the angle (α) to the horizontal, of a support (20) of a log belt carriage (18), the log belt carriage (18) is displaced past a band saw blade (38) of the log band saw (10) and in the process a board is sawn off, and the sawn-off board slides laterally downwards in a guided manner in the direction (50) of the band saw blade (38), **characterized in that**, in a band changing position, the rollers (34, 36) are displaced out of the working position such that the line (39') extends vertically, the displaced rollers (34', 36') are moved (52) towards one another and then the band saw blade (38") hanging loosely from the upper roller (34") is removed and replaced by another band saw blade.

## Revendications

1. Procédé pour scier latéralement des planches d'un tronc d'arbre (22) au moyen d'une scie à ruban (10), dans lequel une lame de scie à ruban (28) est guidée par le biais de deux rouleaux (34, 36) pouvant tourner autour d'axes horizontaux (35, 37), les rouleaux (34, 36) sont disposés l'un au-dessus de l'autre dans une position de travail de la scie à ruban (10) et une ligne (39) reliant les axes de rotation (35, 37) est inclinée d'un angle (α) par rapport à la verticale, le tronc d'arbre (22), dans la position de travail, étant fixé sur une surface d'appui inférieure, inclinée par rapport à l'horizontale suivant l'angle (a), d'un appui (20) d'un chariot de scie à ruban (18), le chariot de scie à ruban (18) étant déplacé devant une lame de scie à ruban (38) de la scie à ruban (10) et une planche étant ainsi sciée et la planche sciée glissant latéralement vers le bas, guidée dans la direction (50) de la lame de scie à ruban (38), **caractérisé en ce que** dans une position de changement de ruban, les rouleaux (34, 36) sont déplacés depuis la position de travail de telle sorte que la ligne (39') s'étende verticalement, les rouleaux déplacés (34', 36') sont déplacés l'un vers l'autre (52) et ensuite la lame de scie à ruban (38") suspendue lâchement depuis le rouleau supérieur (34") est enlevée et remplacée par une autre lame de scie à ruban.
